# EUROPEAN PATENT APPLICATION

(11) **EP 4 344 832 A1**
(43) Date of publication of application: **03.04.2024**
(21) Application number: 23200199.0
(22) Date of filing: 27.09.2023
(51) Int. Cl.: B25J 9/04, B25J 9/10

(54) **HORIZONTAL ARTICULATED ROBOT**

(30) Priority: 29.09.2022 JP 2022155983
(71) Applicant: Seiko Epson Corporation, Tokyo 160-8801 (JP)
(72) Inventor: KIKUCHI, Takayuki, Suwa-shi, Nagano, 392-8502 (JP); NAKANISHI, Daisuke, Suwa-shi, Nagano, 392-8502 (JP)
(74) Representative: MERH-IP Matias Erny Reichl Hoffmann Patentanwälte PartG mbB

(57) **Abstract**

A horizontal articulated robot 1 includes a base 10, a first arm 11 coupled to the base 10 and configured to pivot about a first pivot axis F1, a second arm 12 coupled to the first arm 11 and configured to pivot about the second pivot axis F2, which is parallel to the first pivot axis F1, a first motor 21 configured to drive the first arm 11, a second motor configured to drive the second arm, wherein the first motor 21 and the second motor 22 are disposed inside the base 10, and a driving force of the second motor 22 is transmitted to the second arm 12 via a belt 32 provided inside the first arm 11.

## Description

The present application is based on, and claims priority from JP Application Serial Number 2022-155983, filed September 29, 2022, the disclosure of which is hereby incorporated by reference herein in its entirety.

### BACKGROUND

### 1. Technical Field

The present disclosure relates to a horizontal articulated robot.

### 2. Related Art

For example, JP-A-2005-125489 discloses a SCARA robot that a belt, a deflecting device, or the like are eliminated by disposing an actuating motor in a second robot arm, reducing weight of the robot arm and reducing the inertia moment.

However, in the SCARA robot described in JP-A-2005-125489, since the actuating motor is disposed in the second robot arm, there is a problem in that it is difficult to further reduce the weight of the robot arm.

### SUMMARY

A horizontal articulated robot includes a base; a first arm coupled to the base and configured to pivot about a first pivot axis; a second arm coupled to the first arm and configured to pivot about a second pivot axis, which is parallel to the first pivot axis; a first motor configured to drive the first arm; and a second motor configured to drive the second arm, wherein the first motor and the second motor are disposed in the base, and a driving force of the second motor is transmitted to the second arm via a belt provided inside the first arm.

### BRIEF DESCRIPTION OF THE DRAWINGS

FIG. 1 is a side view showing overall configuration of a horizontal articulated robot according to a first embodiment.
FIG. 2 is a side view showing internal configuration of the horizontal articulated robot according to the first embodiment.
FIG. 3 is a side view showing internal configuration of the horizontal articulated robot according to the first embodiment.
FIG. 4 is a side view showing internal configuration of a horizontal articulated robot according to a second embodiment.
FIG. 5 is a side view showing internal configuration of a horizontal articulated robot according to a third embodiment.
FIG. 6 is a side view showing internal configuration of a horizontal articulated robot according to a fourth embodiment.
FIG. 7 is a plan view showing internal configuration of a first arm of the horizontal articulated robot according to the fourth embodiment.
FIG. 8 is a side view showing internal configuration of a horizontal articulated robot according to ta fifth embodiment.

### DESCRIPTION OF EMBODIMENTS

### 1. First embodiment

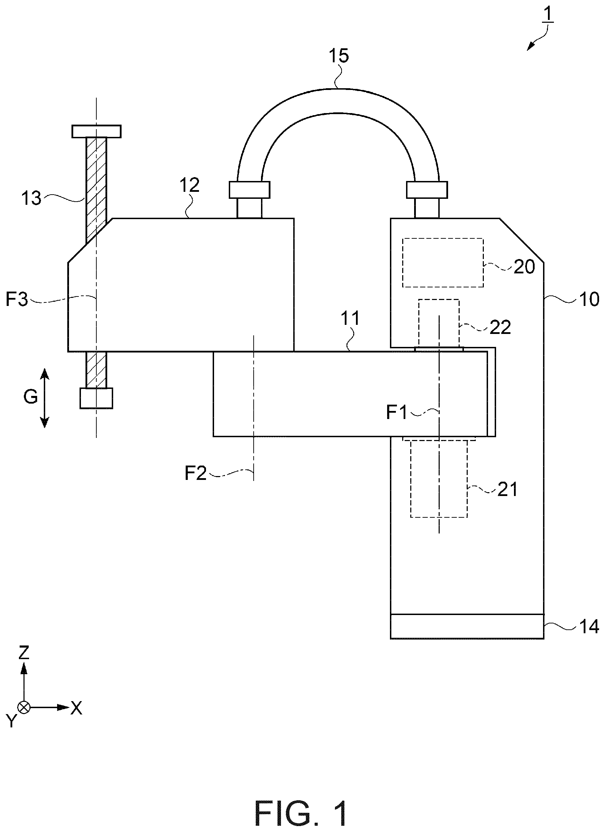

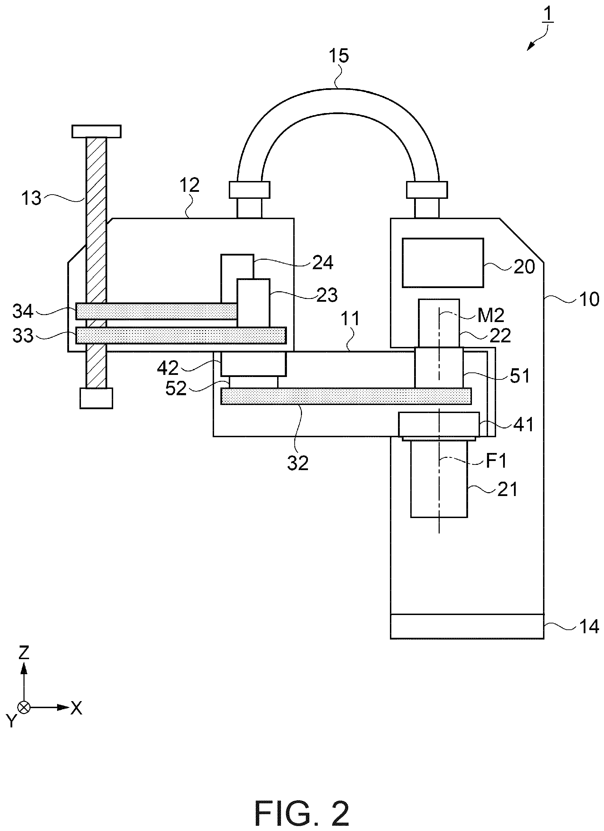

A horizontal articulated robot 1 according to a first embodiment will be described with reference to FIGS. 1 and 2. For convenience of description, an X-axis, a Y-axis, and a Z-axis are illustrated in the following drawings as three axes orthogonal to each other. A direction along the X axis is referred to as an "X direction", a direction along the Y axis is referred to as a "Y direction", and a direction along the Z axis is referred to as a "Z direction". In addition, the arrow tip end side of each axis is also referred to as a "plus side", and the side opposite to the arrow is also referred to as a "minus side". Further, the positive side in the Z direction is also referred to as "above" and the negative side in the Z direction is also referred to as "below".

The horizontal articulated robot 1 includes, as shown in FIGS. 1 and 2, a base 10, a first arm 11 coupled to the base 10 and configured to pivot about a first pivot axis F1, a second arm 12 coupled to the first arm 11 and configured to pivot about the second pivot axis F2, which is parallel to the first pivot axis F1, a third arm 13 that rotates around a third pivot axis F3, which is parallel to the second pivot axis F2, and that drives in a direction along the third pivot axis F3, a first motor 21 configured to drive the first arm 11, a second motor 22 configured to drive the second arm 12, a third motor 23 configured to drive the third arm 13, and a fourth motor 24 configured to drive the third arm 13 in the vertical direction.

The horizontal articulated robot 1 is fixed to a floor or the like via a mounting base 14 coupled to the base 10. The first pivot axis F1, the second pivot axis F2, and the third pivot axis F3 are orthogonal to the XY plane, which is a horizontal plane. The third pivot axis F3 coincides with the central axis of the third arm 13.

The base 10 is coupled to the first arm 11, and includes a first motor 21 that drives the first arm 11, a second motor 22 that drives the second arm 12, and a control section 20 that controls the first arm 11, the second arm 12, and a spindle arm 13. The first motor 21 and the second motor 22 are disposed separated from each other above and below the first arm 11, and in the present embodiment, the first motor 21 is disposed below the first arm 11. Therefore, a heavy motor having a large output can be used as the first motor 21 at the lower part of the base 10, and the horizontal articulated robot 1 can be stably fixed with a good balance.

As shown in FIG. 2, the first arm 11 is coupled to the base 10 and is pivoted around the first pivot axis F1 by the first motor 21, which is disposed in the base 10. A first decelerator 41 coupled to the first motor 21 is provided in the first arm 11. Rotation of the first motor 21 is input to the first decelerator 41, and the first decelerator 41 has a function of outputting torque corresponding to a speed reduction ratio while reducing the speed of the input rotation using a plurality of gears having different numbers of teeth. That is, the output is amplified by reducing the rotational speed of the input. The rotational axis of the first motor 21 and the rotational axis of the first decelerator 41 coincide with the first pivot axis F1, and the first arm 11 pivots around the first pivot axis F1. A pulley 51, a belt 32, a pulley 52, and a second decelerator 42 for transmitting the driving force of the second motor 22 to the second arm 12 are disposed inside the first arm 11.

The second arm 12 is coupled to the first arm 11, and is pivoted around the second pivot axis F2, which is parallel to the first pivot axis F1, by the second motor 22, which is disposed in the base 10. An axis M2, which is the rotational axis of the second motor 22, which is arranged in the base 10, coincides with the first pivot axis F1 of the first arm 11. The driving force of the second motor 22 is transmitted to the second arm 12 via the belt 32, which is provided in the first arm. More specifically, the driving force of the second motor 22 is transmitted to the belt 32 by rotation of the pulley 51 coupled to the second motor 22 and is transmitted to the second arm 12 by rotation of the pulley 52 connected to the second arm 12. Since the axis M2, which is the rotational axis of the second motor 22, coincides with the first pivot axis F1 of the first arm 11, it is possible to prevent the area occupied by the base 10 or the horizontal articulated robot 1 from increasing.

Note that in the present embodiment, a second decelerator 42 is provided between the second arm 12 and the pulley 52 and the second decelerator 42 decelerates rotation of the second motor 22 and transmits the driving force to the second arm 12. Rotation of the second motor 22 is input to the second decelerator 42, and the second decelerator 42 has a function of outputting torque corresponding to a speed reduction ratio while reducing the speed of the input rotation using a plurality of gears having different numbers of teeth. That is, the output is amplified by reducing the rotational speed of the input. Since the second motor 22, which drives the second arm 12, is disposed in the base 10, it is possible to reduce the weight of the second arm 12 and to achieve a reduction in inertia. As the second motor 22, it is possible to use a motor having a large output capable of achieving a high speed.

The third arm 13 is coupled to the second arm 12, is rotated around the third pivot axis F2, which is parallel to the second pivot axis F2, by the third motor 23 and a belt 33 provided in the second arm 12, and is vertically driven in the Z direction, which are the directions of arrows G along the third pivot axis F3, by the fourth motor 24 and a belt 34 provided in the second arm 12. The third arm 13 is controlled by the control section 20 via a control cable 15 provided between the base 10 and the second arm 12, and is pivoted and vertically driven. Note that by attaching a clamping device or a suction device to the end portion of the third arm 13 on the minus side of the Z direction, it is possible to clamp or suction an object and transfer the object to a predetermined place.

As described above, in the horizontal articulated robot 1 of the present embodiment, the weight of the second arm 12 can be reduced because the second motor 22 for driving the second arm 12 is disposed in the base 10. Therefore, the weight of the arm portion is reduced and the inertia associated with the driving of the arm can be reduced.

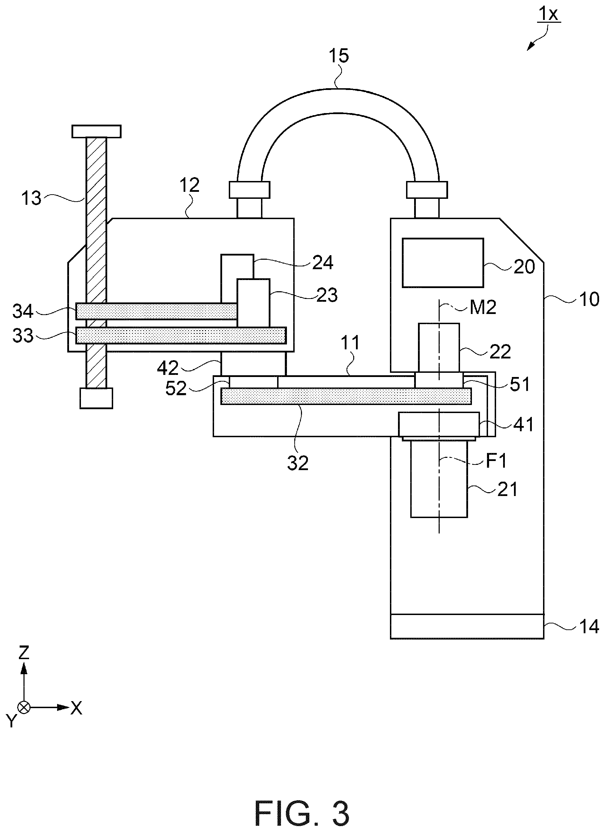

Note that although the configuration in which the second decelerator 42 is provided in the first arm 11 was indicated, a configuration may be adopted in which, for example, as in the horizontal articulated robot 1x shown in FIG. 3, the second decelerator 42 is provided between the first arm 11 and the second arm 12. In this case, the second decelerator 42 may be exposed to the outside, or the second decelerator 42 may be covered by the case of the second arm 12.

### 2. Second embodiment

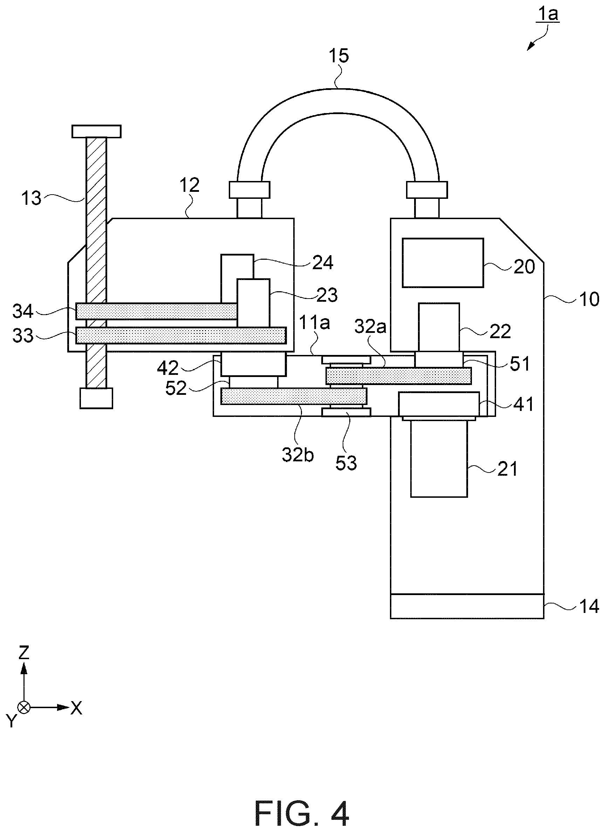

Next, a horizontal articulated robot 1a according to a second embodiment will be described with reference to FIG. 4.

Compared to the horizontal articulated robot 1 of the first embodiment, the horizontal articulated robot 1a of the present embodiment is the same as the horizontal articulated robot 1 of the first embodiment except that the configuration of the first arm 11a is different. Note that the differences from the first embodiment described above will be mainly described, and similar items will be designated by the same reference numerals and description thereof will be omitted.

In the horizontal articulated robot 1a, as shown in FIG. 4, a pulley 53 arranged between the pulley 51 and the pulley 52, a belt 32a in contact with the pulley 51 and the pulley 53, and a belt 32b in contact with the pulley 52 and the pulley 53 are arranged in the first arm 11a, which is coupled to the base 10. Therefore, the driving force of the second motor 22 is transmitted to the second arm 12 via the pulleys 51, 52, and 53 and the belts 32a and 32b, all of which are provided in the first arm.

Since the first arm 11a is configured such that the belt 32a is disposed between the second motor 22 and the belt 32b, the second decelerator 42 can be disposed between the second arm 12 and the belt 32b. Therefore, it is possible to make the first arm 11a thin in the Z direction, and to reduce the weight of the first arm 11a and the height of the horizontal articulated robot 1a.

With such a configuration, it is possible to reduce the height of the horizontal articulated robot 1a, in addition to the effects obtained in the first embodiment.

### 3. Third embodiment

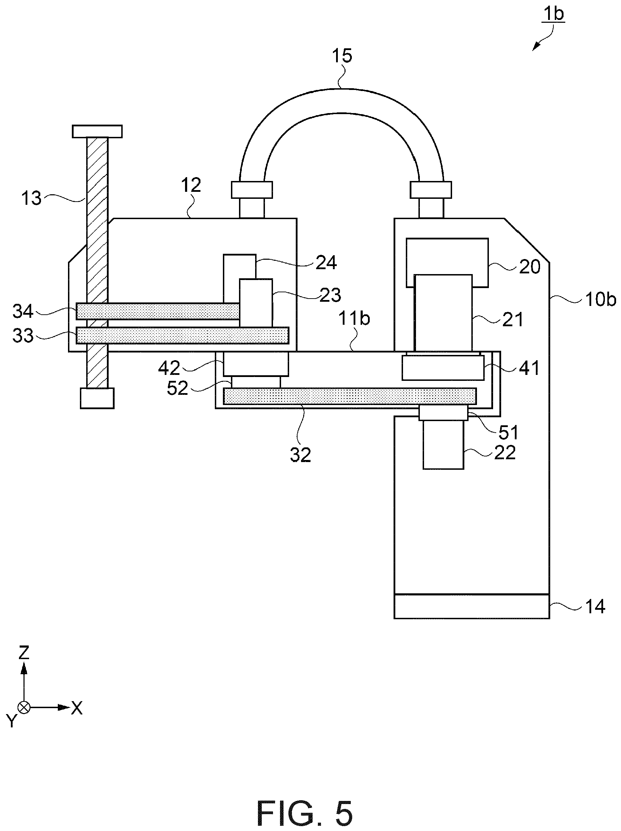

Next, a horizontal articulated robot 1b according to a third embodiment will be described with reference to FIG. 5.

Compared to the horizontal articulated robot 1 of the first embodiment, the horizontal articulated robot 1b of the present embodiment is the same as the horizontal articulated robot 1 of the first embodiment except that the arrangement configuration of the first motor 21 and the second motor 22 in the base 10b and the configuration in the first arm 11b are different. Note that the differences from the first embodiment described above will be mainly described, and similar items will be designated by the same reference numerals and description thereof will be omitted.

In the horizontal articulated robot 1b, as shown in FIG. 5, the first motor 21 and the second motor 22 in the base 10b are disposed separated from each other above and below the first arm 11b, the first motor 21 is disposed above the first arm 11b, and the second motor 22 is disposed below the first arm 11b. By disposing the second motor 22 below the first arm 11b, the second decelerator 42 can be disposed between the belt 32, which transmits the driving force of the second motor 22 in the first arm 11b, and the second arm 12. Therefore, it is possible to make the first arm 11b thin in the Z direction and to reduce the weight of the first arm 11b and the height of the horizontal articulated robot 1b.

With such a configuration, it is possible to reduce the height of the horizontal articulated robot 1b, in addition to the effects obtained in the first embodiment.

### 4. Fourth embodiment

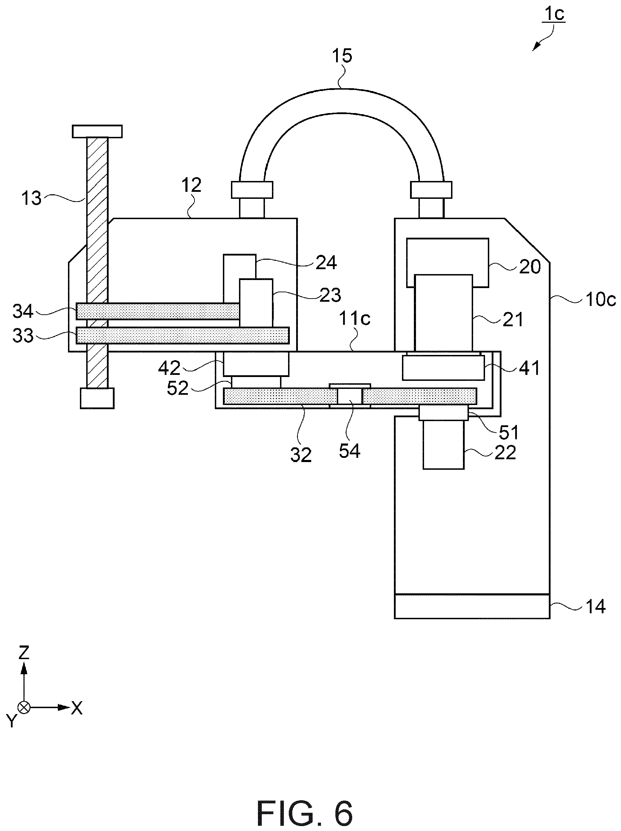

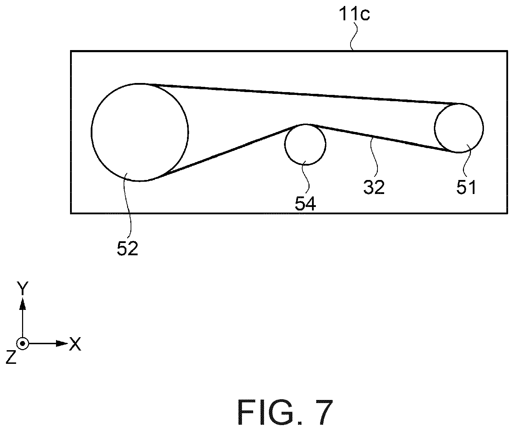

Next, a horizontal articulated robot 1c according to a fourth embodiment will be described with reference to FIGS. 6 and 7.

Compared to the horizontal articulated robot 1 of the first embodiment, the horizontal articulated robot 1c of the present embodiment is the same as the horizontal articulated robot 1 of the first embodiment except that the arrangement configuration of the first motor 21 and the second motor 22 in the base 10c and the configuration in the first arm 11c are different. Note that the differences from the first embodiment described above will be mainly described, and similar items will be designated by the same reference numerals and description thereof will be omitted.

In the horizontal articulated robot 1c, as shown in FIGS. 6 and 7, the first motor 21 in the base 10c is disposed above the first arm 11c and the second motor 22 in the base 10c is disposed below the first arm 11c. By disposing the second motor 22 below the first arm 11c, the second decelerator 42, which reduces the speed of the rotation of the second arm 12, can be disposed between the belt 32, which transmits the driving force of the second motor 22 in the first arm 11c, and the second arm 12.

Further, a pulley 54 for adjusting the tension of the belt 32 is disposed in the first arm 11c in between the pulley 51 and the pulley 52. Therefore, it is possible to control a decrease in the frictional force between the pulley 51 and pulley 52 and the belt 32 and it is possible to more efficiently transmit the driving force of the second motor 22 to the second arm 12.

With such a configuration, in addition to the effects obtained in the first embodiment, the height of the horizontal articulated robot 1c can be reduced and also the driving force of the second motor 22 can be more efficiently transmitted to the second arm 12.

### 5. Fifth embodiment

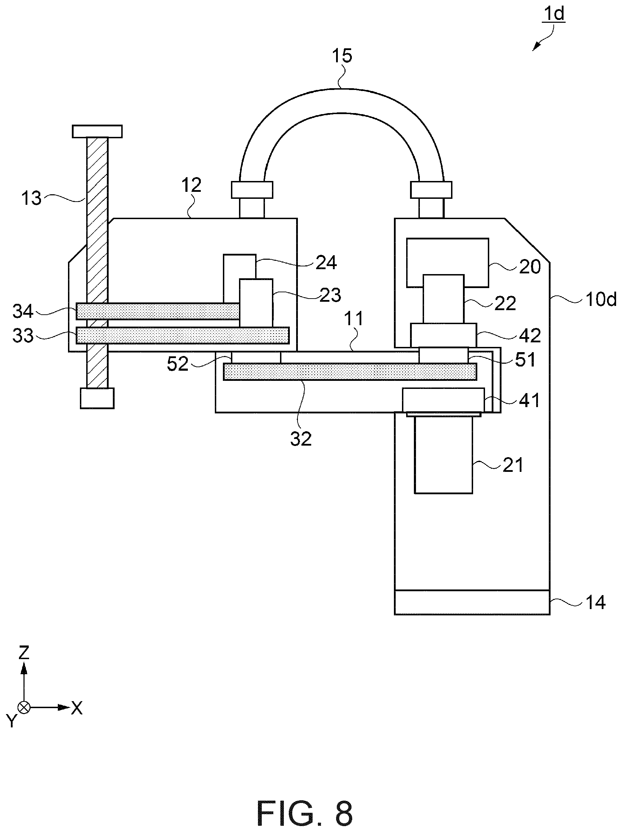

Next, a horizontal articulated robot 1d according to a fifth embodiment will be described with reference to FIG. 8.

Compared to the horizontal articulated robot 1 of the first embodiment, the horizontal articulated robot 1d of the present embodiment is the same as the horizontal articulated robot 1 of the first embodiment except that the arrangement position of the second decelerator 42 is different. Note that the differences from the first embodiment described above will be mainly described, and similar items will be designated by the same reference numerals and description thereof will be omitted.

In the horizontal articulated robot 1d, as shown in FIG. 8, the second decelerator 42, which decelerates the rotation of the second arm 12, is disposed in the base 10d. Therefore, the weight of the arm can be further reduced and inertia associated with drive of the arm can be further reduced.

With such a configuration, it is possible to further improve the effects obtained in the first embodiment.

### 6. First modification

In the above embodiments, configurations in which the first motor 21 and the second motor 22 are separately disposed above and below the first arm 11 in the base 10 was described, but the disclosure is not limited thereto. For example, both the first motor 21 and the second motor 22 may be provided below the first arm 11 in the base 10. Further, both the first motor 21 and the second motor 22 may be provided above the first arm 11 in the base 10.

### 7. Second modification

Configurations were described as having the first decelerator 41 and the second decelerator 42, but the present disclosure is not limited thereto. For example, in a case where a motor having a large output torque such as a so-called direct drive motor can be adopted as the first motor 21 or the second motor 22, a structure in which the first motor 21 directly drives the first arm 11 or a structure in which the second motor 22 directly drives the second arm 12 may be adopted.

### 8. Third modification

Configurations in which the control section 20 is disposed in the base 10 were described, but the present disclosure is not limited thereto. For example, a configuration may be adopted in which a control device is disposed outside the base 10 and is connected by a cable.

## Claims

1. A horizontal articulated robot comprising:
a base;
a first arm coupled to the base and configured to pivot about a first pivot axis;
a second arm coupled to the first arm and configured to pivot about a second pivot axis, which is parallel to the first pivot axis;
a first motor configured to drive the first arm; and
a second motor configured to drive the second arm, wherein
the first motor and the second motor are disposed in the base, and a driving force of the second motor is transmitted to the second arm via a belt provided inside the first arm.

2. The horizontal articulated robot according to claim 1, wherein
an axis of the second motor coincides with the first pivot axis.

3. The horizontal articulated robot according to claim 1, wherein
the first motor and the second motor are disposed in the base separated from each other above and below the first arm.

4. The horizontal articulated robot according to claim 3, wherein
the first motor is disposed below the first arm.

5. The horizontal articulated robot according to claim 3, wherein
the second motor is disposed below the first arm.

6. The horizontal articulated robot according to claim 1, further comprising:
a pulley that is provided inside the first arm and that adjusts tension of the belt.

7. The horizontal articulated robot according to claim 1, further comprising:
a decelerator that decelerates rotation of the second arm and that transmits the driving force to the second arm, the decelerator being disposed in the base.
